# EUROPEAN PATENT APPLICATION

(11) **EP 2 590 462 A1**
(43) Date of publication of application: **08.05.2013**
(21) Application number: 11817695.7
(22) Date of filing: 29.04.2011
(51) Int. Cl.: H04W 72/04

(54) **NEIGHBOR CELL AUTOMATIC CONFIGURATION METHOD AND SYSTEM IN MOBILE NETWORK**

(30) Priority: 17.08.2010 CN 201010259033
(71) Applicant: ZTE Corporation, Shenzhen, Guangdong 518057 (CN)
(72) Inventor: JIANG, Xin, Shenzhen Guangdong 518057 (CN); FANG, Yadong, Shenzhen Guangdong 518057 (CN)
(74) Representative: South, Nicholas Geoffrey
(86) International application number: PCT/CN2011/073576
(87) International publication number: WO 2012/022167

(57) **Abstract**

The present invention provides a method for implementing neighbour cell automatic configuration in a mobile network, comprising: setting a control parameter and sending the control parameter to an RNC, and the RNC implementing neighbour cell automatic configuration according to the control parameter, wherein the control parameter is set by an NMS and sent to an EMS by the NMS, and then sent to the RNC by the EMS; or, the control parameter is directly set by the EMS and sent to the RNC by the EMS. The present invention also provides a system for implementing neighbour cell automatic configuration in a mobile network, comprising a neighbour cell automatic configuration unit, which is configured to, under a condition that an RNC receives a set control parameter, implement neighbour cell automatic configuration according to the control parameter. The method and system can implement automatic configuration, and are simple, easy and less complex.

## Description

### Technical Field

The present invention relates to the field of mobile communications, in particular to a method and a system for implementing a neighbour cell automatic configuration in a mobile network.

### Background

In a communication system, when moving among different base stations, a mobile station or a hand-held mobile terminal needs to implement neighbour cell handover among the base stations. A neighbour cell relation list, hereinafter referred to as a neighbour list, is an important parameter for handover and is used for describing a handover relation among neighbour cells. A User Equipment (UE) determines which cells require measurement based on the neighbour list; and a network collects statistics about a performance parameter thereof based on the neighbour list to show the quality of the network, so as to realize network optimization.

At present, in order to optimize the network, the ways for neighbour cell configuration (also referred to as Neighbour Relation (NR)) comprise: measuring different neighbour cells to obtain a most optimized neighbour cell; measuring different neighbour cells by a UE to obtain a most optimized neighbour cell according to the calculation based on the measured cell list of the UE; or, collecting statistics about indexes, such as a handover failure rate, to obtain a most optimized neighbour cell. However, in these ways, a period of time is needed for statistics and an analysis result cannot be obtained until network optimization analysis is implemented based on the statistics result, and finally, corresponding network parameters, such as the neighbour list and a neighbour cell priority, are modified according to the analysis result.

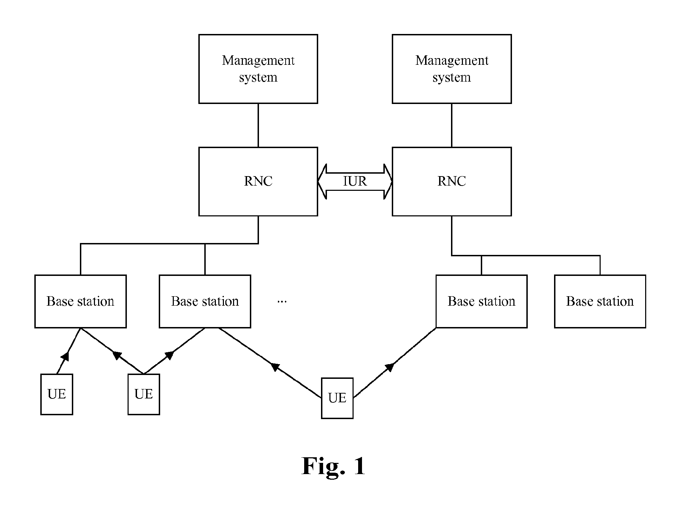

To sum up, in theses ways for the neighbour cell configuration, a period of time is needed for statistics and analysis to obtain the analysis result, and finally, the parameters, such as the neighbour list, are modified according to the analysis result to implement the neighbour cell configuration, as a result, the conventional art has defects as follows: it is very complex to implement the neighbour cell configuration and the statistics and analysis get many people involved; and much time spent on the statistics and analysis will also cause much hysteresis to the adjustment of the neighbour cell. As shown in Fig. 1, for communications among network elements of different manufacturers, for example, when Radio Network Controllers (RNCs) of different manufacturers communicate with each other to transmit parameter information, transmitted parameter information needs translating as the RNCs belong to different manufacturers and their interfaces are different, as a result, it is more difficult to implement the current network elements. Now, a solution for the neighbour cell configuration, which can solve the defects above, implement automatic configuration, and is simple, easy and less complex, is urgently required.

### Summary

Accordingly, the present invention provides a method and a system for implementing a neighbour cell automatic configuration in a mobile network, which can solve the defects above and implement automatic configuration, and are simple, easy and less complex.

The technical solution of the present invention is implemented as follows.

A method for implementing a neighbour cell automatic configuration in a mobile network comprises: setting a control parameter and sending the control parameter to a Radio Network Controller (RNC); and the RNC implementing a neighbour cell automatic configuration according to the control parameter, wherein
the control parameter is set by a Network Management System (NMS) and sent to an Element Management System (EMS) by the NMS, and then sent to the RNC by the EMS; or, the control parameter is directly set by the EMS and sent to the RNC by the EMS.

Preferably, the control parameter comprises at least one of:
parameter 1: whether the RNC supports an Automatic Neighbour Relation (ANR);
parameter 2: whether the RNC supports to exchange a Neighbour Relation (NR) among RNCs through an lur/lu interface; and
parameter 3: whether an attribute of the NR supports to delete the NR during the ANR.

Preferably, the step of the RNC implementing the neighbour cell automatic configuration according to the control parameter comprises:
when a user equipment (UE) accesses a cell, if a value of the parameter 1 on whether the RNC supports the ANR is true, the UE reporting cell neighbour list information that is obtained through detection to the RNC, and the RNC analyzing the cell neighbour list information that is reported to determine whether the NR of the cell needs adjusting.

Preferably, when the cell neighbour list information reported by the UE in real time comprises a neighbour cell that is not in a neighbour list configured by a current cell and it is determined that the NR of the cell needs adjusting, the method further comprises:
for an adjustment of the NR inside a system, directly configuring the neighbour cell and the current cell as neighbour cells; and
for an adjustment of the NR outside the system, if a value of the parameter 2 on whether the RNC supports to exchange the NR among RNCs through the lur/lu interface is true and a value of the parameter 1 of an external RNC relative to the RNC on whether the external RNC supports the ANR is true, then the RNC interacting with the external RNC through the lur/lu interface to configure the neighbour cell and the current cell as neighbour cells.

Preferably, when a periodic or regular statistics shows that the NR should not be in the RNC and it is determined that the NR of the cell needs adjusting, the method further comprises:
for an adjustment of the NR inside a system, if a value of the parameter 3 on whether the attribute of the NR supports to delete the NR during the ANR is true, deleting the NR; and
for an adjustment of the NR outside the system, if a value of the parameter 3 on whether the attribute of the NR supports to delete the NR during the ANR is true, a value of the parameter 2 on whether the RNC supports to exchange the NR among RNCs through the lur/lu interface is true, and a value of the parameter 1 of an external RNC relative to the RNC on whether the external RNC supports the ANR is true, then the RNC interacting with the external RNC through the lur/lu interface to delete the NR.

A system for implementing a neighbour cell automatic configuration in a mobile network comprises: a neighbour cell automatic configuration unit, which is configured to, under a condition that an RNC receives a control parameter that is set, implement a neighbour cell automatic configuration according to the control parameter, wherein
the control parameter is set by a Network Management System (NMS) and sent to an Element Management System (EMS) by the NMS, and then sent to the RNC by the EMS; or, the control parameter is directly set by the EMS and sent to the RNC by the EMS.

Preferably, the control parameter comprises at least one of:
parameter 1: whether the RNC supports an Automatic Neighbour Relation (ANR);
parameter 2: whether the RNC supports to exchange a Neighbour Relation (NR) among RNCs through an lur/lu interface; and
parameter 3: whether an attribute of the NR supports to delete the NR during the ANR.

Preferably, the neighbour cell automatic configuration unit is further configured to, under a condition that a user equipment (UE) accesses a cell, when a value of the parameter 1 on whether the RNC supports the ANR is true, analyze cell neighbour list information by the RNC to determine whether the NR of the cell needs adjusting, wherein the cell neighbour list information is obtained by the UE through detection and is reported to the RNC by the UE.

Preferably, the neighbour cell automatic configuration unit is further configured to: under a condition that the cell neighbour list information reported by the UE in real time comprises a neighbour cell that is not in a neighbour list configured by a current cell and it is determined that the NR of the cell needs adjusting, for an adjustment of the NR inside a system, directly configure the neighbour cell and the current cell as neighbour cells, and for an adjustment of the NR outside the system, implement interaction between the RNC and the external RNC through the lur/lu interface to configure the neighbour cell and the current cell as neighbour cells when a value of the parameter 2 on whether the RNC supports to exchange the NR among RNCs through the lur/lu interface is true and a value of the parameter 1 of an external RNC relative to the RNC on whether the external RNC supports the ANR is true.

Preferably, the neighbour cell automatic configuration unit is further configured to: under a condition that a periodic or regular statistics shows that the NR should not be in the RNC and it is determined that the NR of the cell needs adjusting, for an adjustment of the NR inside a system, delete the NR when a value of the parameter 3 on whether the attribute of the NR supports to delete the NR during the ANR is true, and for an adjustment of the NR outside the system, implement an interaction between the RNC and the external RNC through the lur/lu interface to delete the NR when a value of the parameter 3 on whether the attribute of the NR supports to delete the NR during the ANR is true, a value of the parameter 2 on whether the RNC supports to exchange the NR among RNCs through the lur/lu interface is true, and a value of the parameter 1 of an external RNC relative to the RNC on whether the external RNC supports the ANR is true.

In the present invention, a control parameter is set and sent to an RNC, and the RNC implements a neighbour cell automatic configuration according to the control parameter, wherein the control parameter is set by an NMS and sent to an EMS by then NMS, and then sent to the RNC by the EMS; or, the control parameter is directly set by the EMS and sent to the RNC by the EMS.

Through the present invention, under the control of the NMS and EMS, the RNC can automatically completes the neighbour relation configuration by the preconfigured control parameter, so that automatic configuration can be realized, and the solution is simple, easy and less complex.

### Brief Description of the Drawings

Fig. 1 is a diagram of a system for implementing a neighbour cell automatic configuration in the conventional art;
Fig. 2 is a neighbour cell automatic configuration flowchart in an embodiment of the present invention; and
Fig. 3 is a neighbour cell automatic configuration flowchart when a management system resends configuration information in an embodiment of the present invention.

### Detailed Description of the Embodiments

A basic principle of the embodiments of the present invention is: a control parameter is set and then sent to an RNC; and the RNC implements a neighbour cell automatic configuration according to the control parameter, wherein the control parameter is set by an NMS and sent to an EMS by then NMS, and then sent to the RNC by the EMS; or, the control parameter is directly set by the EMS and sent to the RNC by the EMS.

The implementation of the technical solution is further described below in detail with reference to the drawings.

The solution of an embodiment of the present invention is described as follows. Under a control of administrators (i.e., the NMS and the EMS) of a mobile network, an RNC implements neighbor cell automatic configuration by the preconfigured control parameter; and the adjustment of a neighbour relation among different RNCs is completed by communication through lur/lu interfaces of the RNCs. In conventional art, the NMS and the EMS cannot get involved in administration, and the neighbour cell configuration is implemented by optimizing parameters according to the analysis result obtained by statistics and analysis. While in the embodiment of the present invention, the NMS and the EMS get involved in the administration, the control parameter is preconfigured, based on which the RNC implements neighbor automatic configuration without the aid of people, so that it is simple and easy to implement; executing automatic configuration according to the preconfigured control parameter does not need much time and causes less hysteresis to the adjustment of the neighbour cell; and executing automatic configuration according to the preconfigured control parameter saves the time and complexity for translating when the parameter information is transmitted, thereby reducing the complexity, achieving the automatic neighbor configuration and optimization of the network composed of network elements of different manufacturers, and reducing network operation cost.

A method for implementing a neighbour cell automatic configuration in a mobile network mainly comprises processes as follows.

### 1: A control parameter is set for the neighbour cell automatic configuration, wherein the control parameter specifically comprises at least one of the following parameters:

parameter 1: whether the RNC supports the ANR;
parameter 2: whether the RNC supports to exchange a Neighbour Relation (NR) among RNCs through an lur/lu interface to implement the ANR, wherein it should be noted that when a current RNC interacts with a target RNC, the target RNC can be regarded as an external RNC relative to the current RNC; and
parameter 3: the manually configured NR of a cell, wherein an attribute of the NR comprises whether to support to delete the NR during the ANR, which can be represented by "IsRemoveAllowed".

Here, the three kinds of control parameters above are provided for the RNC to implement the neighbour cell automatic configuration under the control of the NMS and the EMS. The three kinds of control parameters can be either sent to the EMS by the NMS through a northbound interface or directly set on the EMS, and the three kinds of control parameters that are set are finally sent to the RNC for storage so that the RNC can implement the neighbour cell automatic configuration according to the control parameters. In the above, the northbound interface refers to an interface between a network administrator and an operator, and can be represented by Northbound Interface.

### 2: The RNC implements the neighbour cell automatic configuration according to the control parameters.

Specifically, the step of implementing the neighbour cell automatic configuration comprises processes as follows.
1. When a UE accesses a cell, if it is acquired that the RNC supports the ANR according to the control parameter, i.e., the RNC is in an ANR mode, the UE completes a neighbour cell detection of the cell and reports cell neighbour list information that is obtained by detection to the RNC.
2. When the RNC analyzes the cell neighbour list information reported by the UE to find that the cell neighbour list information reported by the UE has been in a neighbour list configured by a current cell, the NR of the cell does not need adjusting.
3. When the RNC analyzes the cell neighbour list information reported by the UE to find that the cell neighbour list information reported by the UE comprises a neighbour cell that is not in the neighbour list configured by the current cell (belonging to real-time statistics), the NR of the cell needs adjusting. For the NR inside the system, the neighbour cell and the current cell are configured as neighbour cells. For the NR outside the system, first, it is needed to know whether the RNC supports to exchange the NR among RNCs through the lur/lu interface according to the control parameter so as to implement the ANR, i.e., it is judged whether the RNC supports to exchange the NR with an external system through the lur/lu interface and whether the external system supports the ANR, and if so, the RNC exchanges the NR with the external system through the lur/lu interface and the neighbour cell and the current cell are configured as neighbour cells.
4. When it is determined that the NR should not be in the RNC after a period of statistics or in other ways (belonging to periodic or regular statistics), the NR of the cell needs adjusting. For the NR inside the system, it is acquired from the control parameter that an attribute of the NR comprises: whether to support to delete the neighbour cell during the ANR, first, it is judged whether the NR is allowed to be deleted, if the value is true, the NR is deleted. For the NR outside the system, the following conditions should be met: the NR is allowed to be deleted, the RNC can exchange the NR with the external system through the lur/lu interface, and the external system, such as the target RNC, supports the ANR, and if all the conditions above are met, the RNC interacts with the external system through the lur/lu interface to delete the NR.
5. The RNC reports the adjusted NR of the cell to a management system, such as the NMS and the EMS, and the NMS and the EMS updates the NR of the cell or reconfigures the control parameter for the neighbour relation configuration of the RNC.

The present invention is described below by embodiments.

### First embodiment

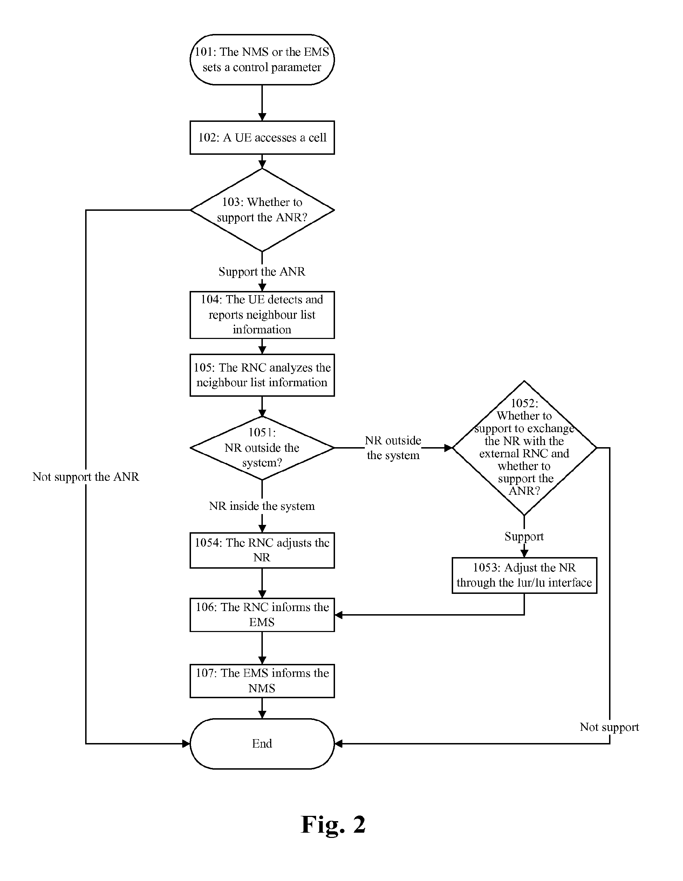

As shown in Fig. 2, the flow of implementing the neighbour cell automatic configuration by the RNC in the embodiment comprises steps as follows.

Step 101: An NMS configures a control parameter, based on which an RNC implements a neighbour cell automatic configuration subsequently, through a northbound interface provided by an EMS, wherein the control parameter is also called a neighbour cell related parameter.

Here, Step 101 can also be: the EMS configures the control parameter of the RNC, which is also called the neighbour cell related parameter and comprises: whether the RNC supports an ANR; whether the RNC supports to exchange an NR among RNCs through an lur/lu interface to implement the ANR; and an NR manually configured by the management system, wherein an attribute of the NR comprises: whether to support to delete the neighbour cell during the ANR.

Step 102: A UE accesses a cell.

Step 103: When the UE accesses the cell, it is judged whether the RNC supports the ANR. If the RNC is in the ANR mode, i.e., the value of the parameter "whether the RNC supports the ANR" is true, then the RNC supports the ANR, and Step 104 is executed; and if the RNC does not support the ANR, the current neighbour cell automatic configuration flow is directly ended.

Step 104: The RNC completes the neighbour cell detection of the cell together with the UE when the RNC supports the ANR, and the UE reports cell neighbour list information obtained through the detection to the RNC.

Step 105: The RNC analyzes the reported cell neighbour list information to determine whether the NR of the cell needs adjusting. The RNC can judge the change of the NR in a real-time or regular statistics way.

Here, if the NR of the cell does not need adjusting, the current neighbour cell automatic configuration flow is ended.

Here, if the NR of the cell needs adjusting, Step 105 specifically comprises processes as follows.

Step 1051: It is judged whether the NR is outside the system, if so, Step 1052 is executed; otherwise, Step 1054 is executed.

Step 1052: It is judged whether the RNC is able to exchange the NR with an external RNC through the lur/lu interface and whether the external RNC supports the ANR, if so, Step 1053 is executed; otherwise, the current neighbour cell automatic configuration flow is ended.

Step 1053: The NR is adjusted according to the NR exchanged through the lur/lu interface.

Step 1054: The NR of the cell is adjusted by the RNC.

It should be noted that, for Step 1051 to Step 1054:
a) If the RNC only needs to adjust the NR inside the system, the adjustment way is as follows: the RNC adds or deletes an NR for the cell; and when deleting the NR, if the attribute "whether to support to delete the neighbour cell in the ANR" of the NR to be deleted is true, the RNC deletes the NR; otherwise, the RNC skips the processing of the NR.
b) If the RNC only needs to adjust the NR among systems, the adjustment way is as follows.
   i. When the parameter "whether the RNC is able to exchange an NR with an external RNC through an lur/lu interface" is false, the adjustment of the NR among systems is skipped. When the parameter "whether the RNC is able to exchange an NR with an external RNC through an lur/lu interface" is "supporting to exchange the NR with the external RNC through the lur interface", the RNC exchanges the NR with the external RNC, also a called target RNC, through the lur interface. When the parameter "whether the RNC is able to exchange an NR with an external RNC through an lur/lu interface" is "supporting to exchange the NR with the external RNC through the lu interface", the RNC exchanges the NR with the external RNC, also called a target RNC, through the lu interface.
   ii. The RNC exchanges the NR with the external RNC through the lur/lu interface to obtain the attribute, whether to support the ANR, of the external RNC, also called a target RNC, if the target RNC does not support the ANR, the adjustment of the NR among systems is skipped.

Here, when adding the NR among systems, the NR is added simultaneously in two cells through the interaction between the RNC and the external RNC, also called the target RNC, via the lur/lu interface. When deleting the RN among systems, if the attribute "whether to support to delete the neighbour cell in the ANR" of the NR is false, the process of the NR is skipped; otherwise, the NR is deleted through the interaction between the RNC and the external RNC, also called the target RNC.

Step 106: The RNC reports the adjusted NR to the EMS, wherein what is reported can be configuration change of the NR or all the current NRs of the RNC.

Step 107: The NR of the cell of the RNC in the EMS is updated, and when an NMS is accessed, the EMS reports the NR to the NMS through a northbound interface.

It should be noted that, for the NR, it is required to add an attribute "whether to support to delete the NR during the ANR" to an UtranRelation field (3GPP TS 32.642), and add attributes "whether to support the ANR" and "whether to support to exchange the NR among RNCs through the lur/lu interface" to an RncFunction field. For the northbound interface, an NR reporting interface should be added. Such new attributes as whether to support the ANR, whether to support to delete the NR during the ANR, and whether to support to exchange the NR among RNCs through the lur/lu interface, can either use new fields or reuse the current fields, both methods are within the scope of protection of the application. For the lur interface, an NR setup and deleting interface should be added.

### Second embodiment

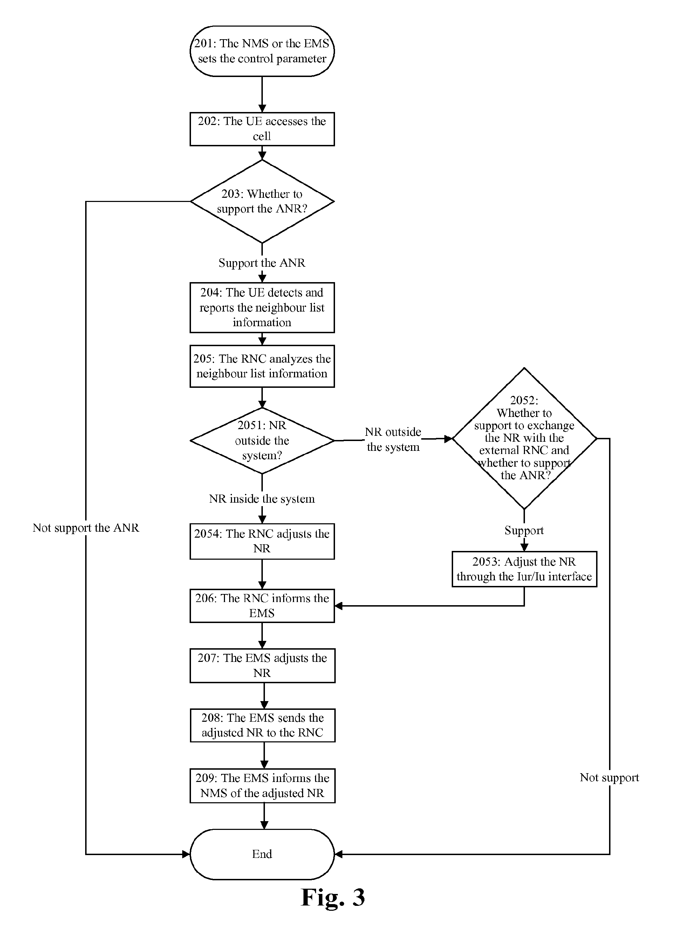

As shown in Fig. 3, in the embodiment, the flow that an RNC reports a detection result to a management system after implementing a neighbour cell automatic configuration, and the management system resends configuration information comprises the steps as follows.

Step 201: An NMS configures a control parameter, based on which the RNC implements the neighbour cell automatic configuration subsequently, through a northbound interface provided by an EMS, wherein the control parameter is also called a neighbour cell related parameter.

Here, Step 201 can also be: the EMS configures the control parameter of the RNC, which is also called the neighbour cell related parameter and comprises: whether the RNC supports an ANR; whether the RNC supports to exchange an NR among RNCs through an lur/lu interface to implement the ANR; and an NR manually configured by the management system, wherein an attribute of the NR comprises: whether to support to delete the neighbour cell during the ANR.

Step 202: A UE accesses a cell.

Step 203: When the UE accesses the cell, it is judged whether the RNC supports the ANR. If the RNC is in the ANR mode, i.e., the value of the parameter "whether the RNC supports the ANR" is true, then the RNC supports the ANR, and Step 204 is executed; and if the RNC does not support the ANR, the current neighbour cell automatic configuration flow is directly ended.

Step 204: The RNC completes the neighbour cell detection of the cell together with the UE when the RNC supports the ANR, and the UE reports cell neighbour list information obtained through the detection to the RNC.

Step 205: The RNC analyzes the reported cell neighbour list information to determine whether the NR of the cell needs adjusting. The RNC can judge the change of the NR in a real-time or regular statistics way.

Here, if the NR of the cell does not need adjusting, the current neighbour cell automatic configuration flow is ended.

Here, if the NR of the cell needs adjusting, Step 205 specifically comprises processes as follows.

Step 2051: It is judged whether the NR is outside the system, if so, Step 2052 is executed; otherwise, Step 2054 is executed.

Step 2052: It is judged whether the RNC is able to exchange the NR with an external RNC through the lur/lu interface and whether the external RNC supports the ANR, if so, Step 2053 is executed; otherwise, the current neighbour cell automatic configuration flow is ended.

Step 2053: The NR is adjusted according to the NR exchanged through the lur/lu interface.

Step 2054: The NR of the cell is adjusted by the RNC.

It should be noted that, for Step 2051 to Step 2054:
a) If the RNC only needs to adjust the NR inside the system, the adjustment way is as follows: the RNC adds or deletes an NR for the cell; and when deleting the NR, if the attribute "whether to support to delete the neighbour cell in the ANR" of the NR to be deleted is true, the RNC deletes the NR; otherwise, the RNC skips the processing of the NR.
b) If the RNC only needs to adjust the NR among systems, the adjustment way is as follows.
   i. When the parameter "whether the RNC is able to exchange an NR with an external RNC through an lur/lu interface" is false, the adjustment of the NR among systems is skipped. When the parameter "whether the RNC is able to exchange an NR with an external RNC through an lur/lu interface" is "supporting to exchange the NR with the external RNC through the lur interface", the RNC exchanges the NR with the external RNC, also a called target RNC, through the lur interface. When the parameter "whether the RNC is able to exchange an NR with an external RNC through an lur/lu interface" is "supporting to exchange the NR with the external RNC through the lu interface", the RNC exchanges the NR with the external RNC, also called a target RNC, through the lu interface.
   ii. The RNC exchanges the NR with the external RNC through the lur/lu interface to obtain the attribute, whether to support the ANR, of the external RNC, also called a target RNC, if the target RNC does not support the ANR, the adjustment of the NR among systems is skipped.

Here, when adding the NR among systems, the NR is added simultaneously in two cells through the interaction between the RNC and the external RNC, also called the target RNC, via the lur/lu interface. When deleting the RN among systems, if the attribute "whether to support to delete the neighbour cell in the ANR" of the NR is false, the process of the NR is skipped; otherwise, the NR is deleted through the interaction between the RNC and the external RNC, also called the target RNC.

Step 206: The RNC reports the adjusted NR to the EMS, wherein what is reported can be configuration change of the NR or all the current NRs of the RNC.

Step 207: The NR of the cell of the RNC in the EMS is updated, and the EMS adjusts the parameter information according to the NR reported by the RNC so as to adjust the current NR of the RNC.

Step 208: After the EMS resends the adjusted NR to the RNC, the RNC adopts the adjusted NR.

Step 209: When an NMS is accessed, the EMS reports the adjusted NR to the NMS through the northbound interface.

A system for implementing a neighbour cell automatic configuration in a mobile network comprises: a neighbour cell automatic configuration unit, which is configured to, under a condition that an RNC receives a control parameter that is set, implement a neighbour cell automatic configuration according to the control parameter, wherein the control parameter is set by an NMS and sent to an EMS by the NMS, and then sent to the RNC by the EMS; or, the control parameter is directly set by the EMS and sent to the RNC by the EMS.

Preferably, the control parameter comprises at least one of:
parameter 1: whether the RNC supports an ANR;
parameter 2: whether the RNC supports to exchange an NR among RNCs through an lur/lu interface; and
parameter 3: whether an attribute of the NR supports to delete the NR during the ANR.

Preferably, the neighbour cell automatic configuration unit is further configured to, under a condition that a UE accesses a cell, when a value of the parameter 1 on whether the RNC supports the ANR is true, analyze cell neighbour list information by the RNC to determine whether the NR of the cell needs adjusting, wherein the cell neighbour list information is obtained by the UE through detection and is reported to the RNC by the UE.

Preferably, the neighbour cell automatic configuration unit is further configured to: under a condition that the cell neighbour list information reported by the UE in real time comprises a neighbour cell that is not in a neighbour list configured by a current cell and it is determined that the NR of the cell needs adjusting, for an adjustment of the NR inside a system, directly configure the neighbour cell and the current cell as neighbour cells, and for an adjustment of the NR outside the system, implement interaction between the RNC and the external RNC through the lur/lu interface to configure the neighbour cell and the current cell as neighbour cells when a value of the parameter 2 on whether the RNC supports to exchange the NR among RNCs through the lur/lu interface is true and a value of the parameter 1 of an external RNC relative to the RNC on whether the external RNC supports the ANR is true.

Preferably, the neighbour cell automatic configuration unit is further configured to: under a condition that a periodic or regular statistics shows that the NR should not be in the RNC and it is determined that the NR of the cell needs adjusting, for an adjustment of the NR inside a system, delete the NR when a value of the parameter 3 on whether the attribute of the NR supports to delete the NR during the ANR is true, and for an adjustment of the NR outside the system, implement an interaction between the RNC and the external RNC through the lur/lu interface to delete the NR when a value of the parameter 3 on whether the attribute of the NR supports to delete the NR during the ANR is true, a value of the parameter 2 on whether the RNC supports to exchange the NR among RNCs through the lur/lu interface is true, and a value of the parameter 1 of an external RNC relative to the RNC on whether the external RNC supports the ANR is true.

The above are only the preferable embodiments of the present invention and not intended to limit the scope of protection of the present invention.

### Industrial Applicability

In the embodiments of the present invention, a control parameter is set and sent to an RNC, and the RNC implements a neighbour cell automatic configuration according to the control parameter, wherein the control parameter can be set by an NMS and sent to an EMS by the NMS, and then sent to the RNC by the EMS; or, the control parameter can also be directly set by the EMS and sent to the RNC by the EMS. Through the embodiments of the present invention, under the control of the NMS and the EMS, the RNC automatically completes the neighbour cell configuration by the preconfigured control parameter, so that the solution can implement automatic configuration and is simple, easy and less complex.

## Claims

1. A method for implementing a neighbour cell automatic configuration in a mobile network, **characterized in that** the method comprises: setting a control parameter and sending the control parameter to a Radio Network Controller (RNC); and the RNC implementing a neighbour cell automatic configuration according to the control parameter, wherein
the control parameter is set by a Network Management System (NMS) and sent to an Element Management System (EMS) by the NMS, and then sent to the RNC by the EMS; or, the control parameter is directly set by the EMS and sent to the RNC by the EMS.

2. The method according to claim 1, **characterized in that** the control parameter comprises at least one of:
parameter 1: whether the RNC supports an Automatic Neighbour Relation (ANR);
parameter 2: whether the RNC supports to exchange a Neighbour Relation (NR) among RNCs through an lur/lu interface; and
parameter 3: whether an attribute of the NR supports to delete the NR during the ANR.

3. The method according to claim 2, **characterized in that** the step of the RNC implementing the neighbour cell automatic configuration according to the control parameter comprises:
when a user equipment (UE) accesses a cell, if a value of the parameter 1 on whether the RNC supports the ANR is true, the UE reporting cell neighbour list information that is obtained through detection to the RNC, and the RNC analyzing the cell neighbour list information that is reported to determine whether the NR of the cell needs adjusting.

4. The method according to claim 3, **characterized in that** when the cell neighbour list information reported by the UE in real time comprises a neighbour cell that is not in a neighbour list configured by a current cell and it is determined that the NR of the cell needs adjusting, the method further comprises:
for an adjustment of the NR inside a system, directly configuring the neighbour cell and the current cell as neighbour cells; and
for an adjustment of the NR outside the system, if a value of the parameter 2 on whether the RNC supports to exchange the NR among RNCs through the lur/lu interface is true and a value of the parameter 1 of an external RNC relative to the RNC on whether the external RNC supports the ANR is true, then the RNC interacting with the external RNC through the lur/lu interface to configure the neighbour cell and the current cell as neighbour cells.

5. The method according to claim 3, **characterized in that** when a periodic or regular statistics shows that the NR should not be in the RNC and it is determined that the NR of the cell needs adjusting, the method further comprises:
for an adjustment of the NR inside a system, if a value of the parameter 3 on whether the attribute of the NR supports to delete the NR during the ANR is true, deleting the NR; and
for an adjustment of the NR outside the system, if a value of the parameter 3 on whether the attribute of the NR supports to delete the NR during the ANR is true, a value of the parameter 2 on whether the RNC supports to exchange the NR among RNCs through the lur/lu interface is true, and a value of the parameter 1 of an external RNC relative to the RNC on whether the external RNC supports the ANR is true, then the RNC interacting with the external RNC through the lur/lu interface to delete the NR.

6. A system for implementing a neighbour cell automatic configuration in a mobile network, **characterized by** comprising: a neighbour cell automatic configuration unit, which is configured to, under a condition that an RNC receives a control parameter that is set, implement a neighbour cell automatic configuration according to the control parameter, wherein
the control parameter is set by a Network Management System (NMS) and sent to an Element Management System (EMS) by the NMS, and then sent to the RNC by the EMS; or, the control parameter is directly set by the EMS and sent to the RNC by the EMS.

7. The system according to claim 6, **characterized in that** the control parameter comprises at least one of:
parameter 1: whether the RNC supports an Automatic Neighbour Relation (ANR);
parameter 2: whether the RNC supports to exchange a Neighbour Relation (NR) among RNCs through an lur/lu interface; and
parameter 3: whether an attribute of the NR supports to delete the NR during the ANR.

8. The system according to claim 7, **characterized in that** the neighbour cell automatic configuration unit is further configured to, under a condition that a user equipment (UE) accesses a cell, when a value of the parameter 1 on whether the RNC supports the ANR is true, analyze cell neighbour list information by the RNC to determine whether the NR of the cell needs adjusting, wherein the cell neighbour list information is obtained by the UE through detection and is reported to the RNC by the UE.

9. The system according to claim 8, **characterized in that** the neighbour cell automatic configuration unit is further configured to: under a condition that the cell neighbour list information reported by the UE in real time comprises a neighbour cell that is not in a neighbour list configured by a current cell and it is determined that the NR of the cell needs adjusting, for an adjustment of the NR inside a system, directly configure the neighbour cell and the current cell as neighbour cells, and for an adjustment of the NR outside the system, implement interaction between the RNC and the external RNC through the lur/lu interface to configure the neighbour cell and the current cell as neighbour cells when a value of the parameter 2 on whether the RNC supports to exchange the NR among RNCs through the lur/lu interface is true and a value of the parameter 1 of an external RNC relative to the RNC on whether the external RNC supports the ANR is true.

10. The system according to claim 8, **characterized in that** the neighbour cell automatic configuration unit is further configured to: under a condition that a periodic or regular statistics shows that the NR should not be in the RNC and it is determined that the NR of the cell needs adjusting, for an adjustment of the NR inside a system, delete the NR when a value of the parameter 3 on whether the attribute of the NR supports to delete the NR during the ANR is true, and for an adjustment of the NR outside the system, implement an interaction between the RNC and the external RNC through the lur/lu interface to delete the NR when a value of the parameter 3 on whether the attribute of the NR supports to delete the NR during the ANR is true, a value of the parameter 2 on whether the RNC supports to exchange the NR among RNCs through the lur/lu interface is true, and a value of the parameter 1 of an external RNC relative to the RNC on whether the external RNC supports the ANR is true.
